# EUROPEAN PATENT APPLICATION

(11) **EP 1 710 683 A2**
(43) Date of publication of application: **11.10.2006**
(21) Application number: 06251648.9
(22) Date of filing: 28.03.2006
(51) Int. Cl.: G06F 3/12

(54) **A printing device and a method of printing**

(30) Priority: 30.03.2005 US 95902
(71) Applicant: Ricoh Company, Ltd., Tokyo 143-8555 (JP)
(72) Inventor: Hong, Jiang, Cupertino, California 95014-5924 (US)
(74) Representative: Leeming, John Gerard

(57) **Abstract**

An approach for printing electronic documents provides for scheduled printing of electronic documents. A printing device is configured to print an electronic document based upon schedule data that indicates when the electronic document is to be printed. The schedule data may be specific to a particular electronic document or may apply to multiple electronic documents. The schedule data may be generated at a client device and provided to the printing device, or may be generated and/or managed at the printing device.

## Description

This invention relates generally to printing of electronic documents, and more specifically, to an approach for providing scheduled printing of electronic documents.

The approaches described in this section are approaches that could be pursued, but not necessarily approaches that have been previously conceived or pursued. Therefore, unless otherwise indicated, the approaches described in this section may not be prior art to the claims in this application and are not admitted to be prior art by inclusion in this section.

Conventional printing of electronic documents typically involves an application program generating print data and sending the print data to a printing device. The print data typically conforms to a particular format, protocol or language, such as page description language (PDL). Postscript is an example printing language that conforms to PDL.

One of the problems with this approach for printing electronic documents is that printing devices process print data in the order in which it is received. Thus, in situations where multiple electronic documents are sent to the same printing device, the electronic documents are printed one at a time, in the order in which they were received. When multiple users submit electronic documents to the same printing device, there is no way for any of the users to known exactly when their particular electronic document will be printed, since the users do not know when the printing device received their particular electronic document relative to other electronic documents. This makes it difficult for users to print electronic documents that contain sensitive information because the users do not know exactly when the electronic documents will be printed. There is also the risk that another user accidentally removes from a printing device both their own electronic document and the electronic document of another user that contains the sensitive information.

Another problem with the serial nature of conventional printing arrangements is that the printing of electronic documents that require special resources or a large amount of resources can prevent other electronic documents from being printed until the required resources can be made available. For example, if a printing device exhausts a particular consumable resource, such as toner, paper, staples, etc., printing a large electronic document, then all printing is halted until the exhausted consumable resources can be replenished. Based on the foregoing, there is a need for an approach for printing electronic documents that does not suffer from limitations of prior approaches.

An approach for printing electronic documents provides for scheduled printing of electronic documents. A printing device is configured to print an electronic document based upon schedule data that indicates when the electronic document is to be printed. The schedule data may be specific to a particular electronic document or may apply to multiple electronic documents. Schedule data may be generated at a client device and provided to the printing device, or schedule data may be generated and/or managed at the printing device.

According to an embodiment of the invention there is provided a computer-implemented method for printing an electronic document, the method comprising:
at a client detecting user input that indicates a data and time when an electronic document is to be printed at a printing device;
generating, in response to the user input, schedule data that indicates the date and time when the electronic document is to be printed at the printing device; and
transmitting the schedule data from the client to the printing device over a communications link to cause the electronic document to be printed at the printing device at the date and time indicated by the schedule data.

In the figures of the accompanying drawings like reference numerals refer to similar elements.

FIG. 1 is a block diagram that depicts an arrangement for providing scheduled printing of electronic documents according to an embodiment of the invention.

FIG. 2 is a block diagram that depicts an example configuration screen for specifying scheduled printing options for a printing device.

FIG. 3 is a flow diagram that depicts an operational example of scheduled printing of electronic documents.

FIG. 4 is a block diagram of a computer system on which embodiments of the invention may be implemented.

In the following description, for the purposes of explanation, numerous specific details are set forth in order to provide a thorough understanding of the present invention. It will be apparent, however, to one skilled in the art that the present invention may be practiced without these specific details. In other instances, well-known structures and devices are shown in block diagram form in order to avoid unnecessarily obscuring the present invention. Various aspects of the invention are described hereinafter in the following sections:
I. OVERVIEW
II. CONFIGURATION DATA MANAGEMENT ARCHITECTURE
III. CREATING AND MANAGING DOCUMENT-SPECIFIC SCHEDULE DATA
IV. CREATING AND MANAGING SCHEDULE DATA APPLICABLE TO MULTIPLE ELECTRONIC DOCUMENTS
V. SCHEDULED PRINTING OF ELECTRONIC DOCUMENTS
VI. OPERATIONAL EXAMPLE
VII. IMPLEMENTATION MECHANISMS

### I. OVERVIEW

An approach for printing electronic documents provides for scheduled printing of electronic documents. A printing device is configured to print an electronic document based upon schedule data that indicates when the electronic document is to be printed. The schedule data may be specific to a particular electronic document or may apply to multiple electronic documents. Schedule data may be generated at a client device and provided to the printing device, or schedule data may be generated and/or managed at the printing device.

### II. CONFIGURATION DATA MANAGEMENT ARCHITECTURE

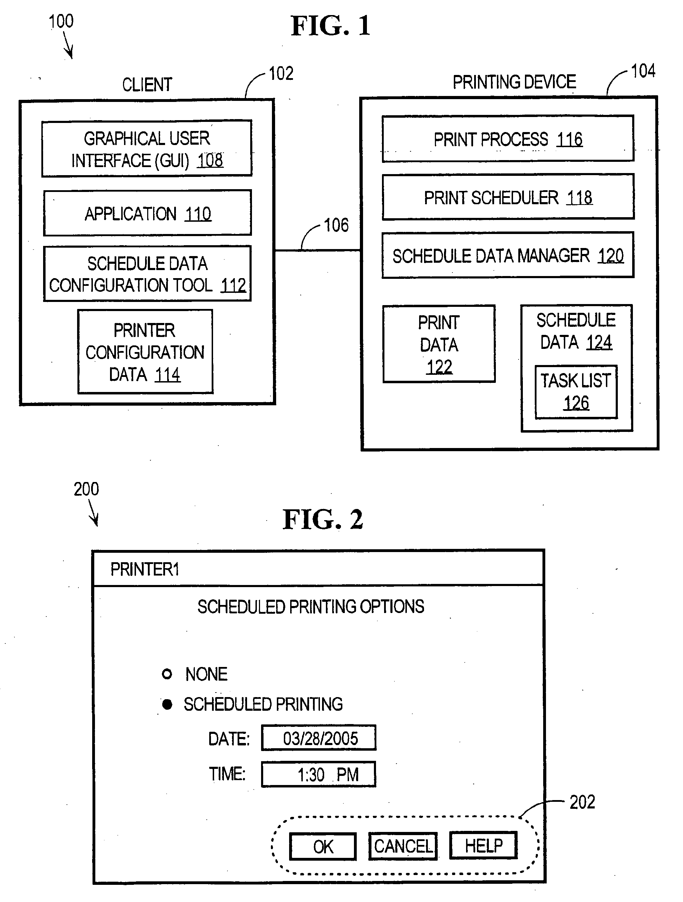

FIG. 1 is a block diagram that depicts an arrangement 100 for providing scheduled printing of electronic documents according to an embodiment of the invention. Arrangement 100 includes a client 102 communicatively coupled to a printing device 104 via a communications link 106. Communications link 106 may be implemented by any medium or mechanism that provides for the exchange of data between client 102 and printing device 104. Examples of communications link 106 include, without limitation, a network such as a Local Area Network (LAN), Wide Area Network (WAN), Ethernet or the Internet, or one or more terrestrial, satellite or wireless links.

Client 102 may be any device that initiates printing of an electronic document. Examples of client 102 include, without limitation, personal computers, workstations, minicomputers, mainframe computers, portable computers, cellphones, personal digital assistants and any other type of wireless or mobile device. According to one embodiment of the invention, client 102 includes a graphical user interface (GUI) 108, an application 110, a schedule data configuration tool 112 and printer configuration data 114.

GUI 108 may be any mechanism and/or process capable of conveying information to and receiving information from a user of client 102. Application 110 is any type of software application that is capable of requesting that an electronic document be printed. Examples of application 110 include, without limitation, a word processor program, a spreadsheet program and an email client. Schedule data configuration tool 112 is a mechanism or process that allows schedule data 124 to be generated, updated and/or maintained from client 102. Client 102 may include other mechanisms, components and processes that are not depicted in FIG. 1 and described herein for purposes of explanation.

Printing device 104 may be any device that has the capability of printing electronic documents. Examples of printing device 104 include, without limitation, printers, copiers, facsimile machines and multi-function peripherals (MFPs). An MFP is a device that performs one or more functions, such as printing, copying, facsimile and scanning. According to one embodiment of the invention, printing device 104 includes a print process 116, a print scheduler 118, a schedule data manager 120, print data 122 and schedule data 124. Print process 116 is a process that causes electronic documents to be printed on printing device 104. Print scheduler 118 is a mechanism or process that schedules the printing of electronic documents based upon schedule data 124. Schedule data manager 120 is a mechanism or process that manages schedule data 124. Print data 122 is electronic document data that has been formatted for printing. Schedule data 124 is data that indicates when electronic documents should be printed. Print data 122 and schedule data 124 may be stored in volatile memory, non-volatile memory, such as one or more disks, or any combination of volatile and non-volatile memory. Each of these elements is described in more detail hereinafter. Printing device 104 may include other mechanisms, components and processes that are not depicted in FIG. 1 and described herein for purposes of explanation.

Although embodiments of the invention are described herein in the context of a single client 102 and a single printing device 104, the invention is not limited to this context. The approach may be used with any number of clients printing to a printing device and a client printing to any number of printing devices.

### III. CREATING AND MANAGING DOCUMENT-SPECIFIC SCHEDULE DATA

Document-specific schedule data may be created and maintained using a wide variety of techniques, depending upon a particular implementation, and the invention is not limited to any particular technique. Printer configuration data 114 conventionally specifies attribute values of printing device 104, such as ports, file sharing attribute values, color attribute values, security attribute values, as well as paper handling and finishing option attribute values. The initial attribute values are typically set by a manufacturer and then customized by a user using a printer configuration tool. Some of the attribute values of printer configuration data 114 may be changed on a print options screen when an electronic document is printed. For example, a user may decide to change a color attribute value from a default value to a different value at the time of printing an electronic document.

According to one embodiment of the invention, printer configuration data 114 indicates whether an electronic document is to be printed immediately, or whether scheduled, i.e., delayed, printing is to be used. FIG. 2 is a block diagram that depicts an example configuration screen 200 for specifying scheduled printing options for a printing device identified as PRINTER1. Configuration screen 200 allows a user to select radial buttons associated with no scheduled printing and scheduled printing. If no scheduled printing is selected, then when the print data is provided to printing device 104, the print data is processed immediately as conventional print data by printing device 104, i.e., subject to the processing of other print data previously received by printing device 104.

If a user selects scheduled printing, then the user is prompted for a date and time at which the electronic document is to be printed, as depicted in FIG. 2. For example, a user may specify that an electronic document containing sensitive information is to be printed at a particular date and time when the user knows they, or another trusted individual, can be at printing device 104 to receive the printed document. There may also be situations where a particular electronic document requires special resources to be printed or a large amount of resources to be printed. In this situation, the printing of the particular electronic document may be scheduled for a time when the required resources will be available. This also allows large electronic documents to be printed at a time when it is less likely to interfere with the printing of other electronic documents, e.g., at night or on weekends. Default date and time values for scheduled printing may be selected during device installation and configuration and customized thereafter. Alternatively, default date and time values may be automatically determined based upon attributes of an electronic document. For example, default date and time values may be set to night or weekends for electronic documents that are known or believed to require special resources or a large amount of resources.

A set of user controls 202 allow a user to confirm or cancel scheduled printing options or request help. Configuration screen 200 is provided as an example of how a user might specify scheduled printing options and the invention is not limited to the particular example provided by configuration screen 200.

### IV. CREATING AND MANAGING SCHEDULE DATA APPLICABLE TO MULTIPLE ELECTRONIC DOCUMENTS

In addition to schedule data being specific to particular electronic documents, schedule data may be applied to multiple electronic documents. The schedule data may specify dates and times for printing electronic documents having certain attribute values. The attribute values may be related to electronic documents that require special resources to print or a large amount of resources to print. For example, suppose that accounting reports for a particular business organization require a large amount of printing resources to print. In this situation, schedule data configuration tool 112 may be used to generate schedule data 124 on printing device 104 that specifies that electronic documents that are related to accounting and that exceed a specified size are to be printed at night or on weekends. The attribute values may also be selected for the convenience in printing and retrieving electronic documents. For example, schedule data 124 may specify a particular date and time for printing electronic documents that originate from a particular source or a particular user. This allows a user to print multiple electronic documents remotely, even from different sources, and have them printed at a particular date and time (and location) when the user would like to retrieve the printed electronic documents. Schedule data configuration tool 112 may be used to update schedule data 124 on printing device 104 at any time to reflect a change in policy.

According to another embodiment of the invention, printing device 104 is configured to determine whether sufficient resources are available to print an electronic document and if not, then to generate a notification that sufficient resources are not available to print the electronic document. For example, printing device 104 may be configured to determine whether sufficient consumable resources such as toner, paper or staples are available to print a particular electronic document. If a sufficient amount of consumable resources is not available, then printing device 104 generates and provides a notification through a user interface on printing device 104. Alternatively, printing device 104 may provide the notification back to client 102.

### V. SCHEDULED PRINTING OF ELECTRONIC DOCUMENTS

According to one embodiment of the invention, schedule data is used to provide scheduled printing of electronic documents. A user interacts with application 110 via GUI 108 to initiate printing of an electronic document. For example, a user may select a print option in a word processor to print an electronic document. Application 110 processes the electronic document and generates print data. For example, application 110 may use a print driver to generate print data that conforms to a print data language, such as Printer Description Language (PDL). Application 110 sends the print data to printing device 104. Schedule data is also generated as described herein and provided to printing device 104. The schedule data may be included with the print data provided by client 102 to printing device 104. Alternatively, the schedule data may be provided to printing device 104 separate from the print data provide to printing device 104.

Printing device 104 receives the print data and determines whether the print data is to be processed immediately, i.e., in real time, or in accordance with scheduled printing. The determination of whether the print data is to be process immediately or in accordance with schedule printing is based upon whether schedule data exists for an electronic document and if so, whether it is time for the electronic document to be printed. If there is no schedule data associated with a particular electronic document, then the electronic document is printed immediately. In this situation, the print data is provided to print process 116, which processes the print data and causes a printed version of the electronic document to be printed. If there is schedule data associated with the particular electronic document, then the print data is stored on printing device 104 as print data 122. Print scheduler 118 then determines when the print data is to be processed based upon schedule data included in print data 122 or based upon schedule data 124.

According to one embodiment of the invention, a task list 126 is maintained in schedule data 124 and used to manage the scheduled printing of electronic documents. When scheduled printing is to be used for a particular electronic document, an entry is created for the particular electronic document in task list 126. The entry identifies the electronic document and the date and/or time at which the electronic document is to be printed. Print scheduler 118 compares the dates and times for entries in task list 126 to a current date and time to know when a particular electronic document should be printed. When it is time for a particular electronic document to be printed, print scheduler 118 causes print process 116 to process the print data 122 that corresponds to the particular electronic document to generate a printed copy of the electronic document. Task list 126 may be edited by a user, for example, using schedule data configuration tool 112 or a generic Web browser. For example, a user may change the date and/or time for an electronic document or may cancel the printing of an electronic document.

### VI. OPERATIONAL EXAMPLE

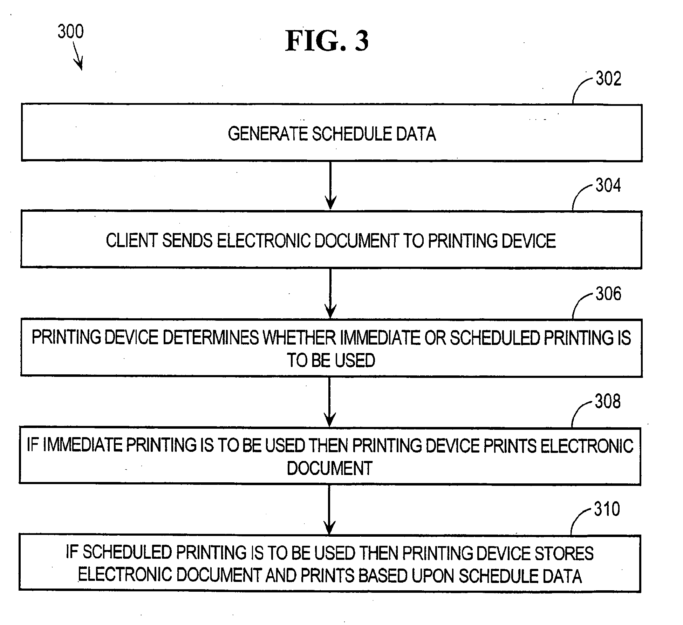

An operational example of the approach described herein for scheduled printing of electronic documents is now described with reference to a flow diagram 300 of FIG. 3. In step 302, schedule data is generated. For example, printer configuration data 114 may be configured to include schedule data. As another example, schedule data may be generated when a user elects to print an electronic document using application 110. Schedule data may also be generated by application 110. As yet another example, schedule data configuration tool 112 may be used to generate schedule data 124.

In step 304, a client sends an electronic document to a printing device. For example, a user of client 102 instructs application 110 to print the electronic document on printing device 104 and the electronic document is sent from client 102 to printing device 104 over communications link 106. As another example, printing device 104 may be configured to request electronic documents from client 102. In this situation, client 102 provides the electronic document to printing device 104 in response to a request from printing device 104. Requests may be made based upon a user-defined schedule and for content specified by a user. For example, printing device 104 may be configured to request live content such as financial and news data and print the content at specified times. The content to be requested and the particular schedule to be used to request the content may be specified in task list 126 in schedule data 124. The electronic document may be in the form of print data generated by client 102. For example, client 102 may generate print data that conforms to PDL.

In step 306, the printing device determines whether immediate or scheduled printing is to be used to print the electronic document. If no schedule data is associated with the received electronic document, or if data indicates that immediate printing is to be used, then immediate printing is used. In this situation, then in step 308, then the printing device immediately prints the electronic document. For example, print process 116 processes the print data received from client 102 and causes a printed version of the electronic document to be generated.

The print data that printing device 104 receives from client 102 may include schedule data. For example, when the user elected to print the electronic document using application 110, the user specified that scheduled printing was to be used and indicated a date and time for the electronic document to be printed. The date and time information was included in the print data generated by application 110. In other situations, the print data that printing device 104 receives from client 102 may not include schedule data, but schedule data 124 may apply to the electronic document. For example, the electronic document may have attribute values that match attribute values in schedule data 124. In this situation, scheduled printing is to be used and the electronic document is to be printed at the date and time indicated by schedule data 124.

If scheduled printing is to be used, the print data received from client 102 is stored on printing device as print data 122 and an entry is created in task list 126. Print scheduler 118 then arranges for the electronic document to be printed at the indicated data and time by periodically reviewing the entries in task list 126. For example, print scheduler 118 compares the date and time data contained in the entries in task list 126 to determine when particular electronic documents are to be printed. When it is time to print a particular electronic document, print scheduler 118 causes the stored print data 122 to be retrieved and processed by print process 116. Although flow diagram 300 depicts a particular set of steps in a particular order, other implementations may use fewer or more steps, in the same or different order, than those depicted in FIG. 3.

### VII. IMPLEMENTATION MECHANISMS

The approach described herein for providing scheduled printing of electronic documents provides many benefits. The approach allows electronic documents to be printed at particular times, which is beneficial when an electronic document contains sensitive information and a user wants to be present at a printing device when an electronic document is printed. The approach also allows the printing of electronic documents that consume special resources, or a large amount of resources, e.g., processor resources, paper, toner, etc., at a particular time when the necessary resources can be made available. The approach further allows electronic documents to be printed when a client that generated the electronic documents is not in communication with a printing device. This is particularly useful in mobile device applications because it allows a mobile device to schedule the printing of an electronic document when the mobile device is in communications with a printing device, even if the mobile device is not in communications with the printing device when the electronic document is printed. As another example, it allows a user to submit an electronic document to a printing device for printing at a later time and then shutdown their client device, such as a personal computer.

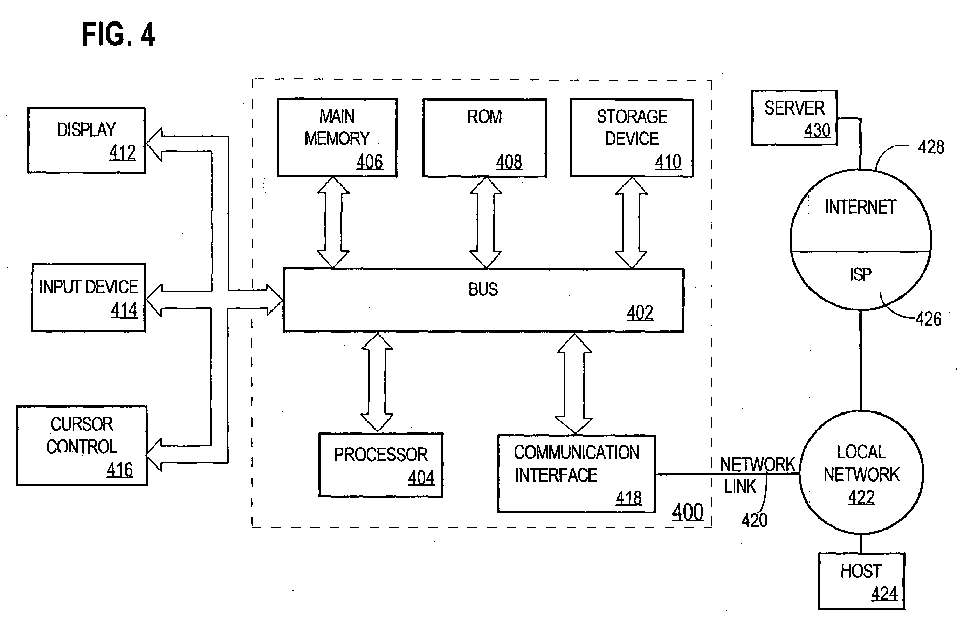

The approach described herein may be implemented on any type of computing architecture or platform, depending upon a particular implementation. For example, the functionality described herein may be implemented on an MFP using and application program interface (API) of the MFP. FIG. 4 is a block diagram that depicts an example computer system 400 upon which an embodiment of the invention may be implemented. Computer system 400 includes a bus 402 or other communication mechanism for communicating information, and a processor 404 coupled with bus 402 for processing information. Computer system 400 also includes a main memory 406, such as a random access memory (RAM) or other dynamic storage device, coupled to bus 402 for storing information and instructions to be executed by processor 404. Main memory 406 also may be used for storing temporary variables or other intermediate information during execution of instructions to be executed by processor 404. Computer system 400 further includes a read only memory (ROM) 408 or other static storage device coupled to bus 402 for storing static information and instructions for processor 404. A storage device 410, such as a magnetic disk or optical disk, is provided and coupled to bus 402 for storing information and instructions.

Computer system 400 may be coupled via bus 402 to a display 412, such as a cathode ray tube (CRT), for displaying information to a computer user. An input device 414, including alphanumeric and other keys, is coupled to bus 402 for communicating information and command selections to processor 404. Another type of user input device is cursor control 416, such as a mouse, a trackball, or cursor direction keys for communicating direction information and command selections to processor 404 and for controlling cursor movement on display 412. This input device typically has two degrees of freedom in two axes, a first axis (e.g., x) and a second axis (e.g., y), that allows the device to specify positions in a plane.

The invention is related to the use of computer system 400 for implementing the techniques described herein. According to one embodiment of the invention, those techniques are performed by computer system 400 in response to processor 404 executing one or more sequences of one or more instructions contained in main memory 406. Such instructions may be read into main memory 406 from another machine-readable medium, such as storage device 410. Execution of the sequences of instructions contained in main memory 406 causes processor 404 to perform the process steps described herein. In alternative embodiments, hard-wired circuitry may be used in place of or in combination with software instructions to implement the invention. Thus, embodiments of the invention are not limited to any specific combination of hardware circuitry and software.

The term "machine-readable medium" as used herein refers to any medium that participates in providing data that causes a machine to operation in a specific fashion. In an embodiment implemented using computer system 400, various machine-readable media are involved, for example, in providing instructions to processor 404 for execution. Such a medium may take many forms, including but not limited to, non-volatile media, volatile media, and transmission media. Non-volatile media includes, for example, optical or magnetic disks, such as storage device 410. Volatile media includes dynamic memory, such as main memory 406. Transmission media includes coaxial cables, copper wire and fiber optics, including the wires that comprise bus 402. Transmission media can also take the form of acoustic or light waves, such as those generated during radiowave and infra-red data communications.

Common forms of machine-readable media include, for example, a floppy disk, a flexible disk, hard disk, magnetic tape, or any other magnetic medium, a CD-ROM, any other optical medium, punchcards, papertape, any other physical medium with patterns of holes, a RAM, a PROM, and EPROM, a FLASH-EPROM, any other memory chip or cartridge, a carrier wave as described hereinafter, or any other medium from which a computer can read.

Various forms of machine-readable media may be involved in carrying one or more sequences of one or more instructions to processor 404 for execution. For example, the instructions may initially be carried on a magnetic disk of a remote computer. The remote computer can load the instructions into its dynamic memory and send the instructions over a telephone line using a modem. A modem local to computer system 400 can receive the data on the telephone line and use an infra-red transmitter to convert the data to an infra-red signal. An infra-red detector can receive the data carried in the infra-red signal and appropriate circuitry can place the data on bus 402. Bus 402 carries the data to main memory 406, from which processor 404 retrieves and executes the instructions. The instructions received by main memory 406 may optionally be stored on storage device 410 either before or after execution by processor 404.

Computer system 400 also includes a communication interface 418 coupled to bus 402. Communication interface 418 provides a two-way data communication coupling to a network link 420 that is connected to a local network 422. For example, communication interface 418 may be an integrated services digital network (ISDN) card or a modem to provide a data communication connection to a corresponding type of telephone line. As another example, communication interface 418 may be a local area network (LAN) card to provide a data communication connection to a compatible LAN. Wireless links may also be implemented. In any such implementation, communication interface 418 sends and receives electrical, electromagnetic or optical signals that carry digital data streams representing various types of information.

Network link 420 typically provides data communication through one or more networks to other data devices. For example, network link 420 may provide a connection through local network 422 to a host computer 424 or to data equipment operated by an Internet Service Provider (ISP) 426. ISP 426 in turn provides data communication services through the world wide packet data communication network now commonly referred to as the "Internet" 428. Local network 422 and Internet 428 both use electrical, electromagnetic or optical signals that carry digital data streams. The signals through the various networks and the signals on network link 420 and through communication interface 418, which carry the digital data to and from computer system 400, are exemplary forms of carrier waves transporting the information.

Computer system 400 can send messages and receive data, including program code, through the network(s), network link 420 and communication interface 418. In the Internet example, a server 430 might transmit a requested code for an application program through Internet 428, ISP 426, local network 422 and communication interface 418. The received code may be executed by processor 404 as it is received, and/or stored in storage device 410, or other non-volatile storage for later execution. In this manner, computer system 400 may obtain application code in the form of a carrier wave.

In the foregoing specification, embodiments of the invention have been described with reference to numerous specific details that may vary from implementation to implementation. Thus, the sole and exclusive indicator of what is, and is intended by the applicants to be, the invention is the set of claims that issue from this application, in the specific form in which such claims issue, including any subsequent correction. Hence, no limitation, element, property, feature, advantage or attribute that is not expressly recited in a claim should limit the scope of such claim in any way. The specification and drawings are, accordingly, to be regarded in an illustrative rather than a restrictive sense.

## Claims

1. A printing device 104 configured to print an electronic document based upon schedule data 124 that indicates when the electronic document should be printed.

2. The printing device 104 as recited in Claim 1, wherein the schedule data 124 indicates when electronic documents having particular attributes are to be printed.

3. The printing device 104 as recited in Claim 1 or Claim 2, wherein the printing device 104 is further configured to receive the schedule data 124 from a client over a communications link 106.

4. The printing device 104 according to any one of Claims 1 to 3, wherein the printing device 104 is further configured to receive the schedule data 124 from a wireless device over a wireless communications link 106.

5. The printing device 104 according to any one of the preceding claims, wherein the printing device 104 is further configured to:
receive the schedule data 124 from a client over a communications link 106; and
update a task list maintained on the printing device to include the schedule data 124.

6. The printing device 104 as recited in Claim 5, wherein the printing device 104 is further configured to periodically examine the task list 126 and compare the schedule data 124 stored therein to a current data and time to determine whether the electronic document should be printed.

7. The printing device 104 according to any one of the preceding claims, wherein the printing device 104 is further configured to:
receive updated schedule data over a communications link 106; and
if the electronic document has not yet been printed, then print the electronic document based upon the updated schedule data.

8. The printing device 104 as recited in Claim 7, wherein the printing device 104 is further configured to update a task list 126 maintained at the printing device 104 to include the updated schedule data.

9. The printing device 104 according to any one of the preceding claims, wherein the printing device 104 is further configured to:
generate updated schedule data at the printing device 104 in response to one or more user requests; and
if the electronic document has not yet been printed, then print the electronic document based upon the updated schedule data.

10. The printing device 104 as recited in Claim 9, wherein the printing device 104 is further configured to update a task list 126 maintained at the printing device 104 to include the updated schedule data.

11. The printing device 104 according to any one of the preceding claims, wherein the printing device 104 is further configured to:
request the electronic document from a client; and
receive the electronic document from the client.

12. The printing device 104 according to any one of the preceding claims, wherein the printing device 104 is further configured to:
determine, based upon the schedule data 124, a' time at which the electronic document is to be printed;
prior to the time, determine whether sufficient consumable resources are available to print the electronic document; and
if sufficient consumable resources are not available to print the electronic document, then providing an indication that sufficient consumable resources are not available to print the electronic document.

13. A method for printing an electronic document, the method comprising:
at a client 102 detecting user input that indicates a data and time when an electronic document is to be printed at a printing device 104;
generating, in response to the user input, schedule data 124 that indicates the date and time when the electronic document is to be printed at the printing device 104; and
transmitting the schedule data 124 from the client to the printing device 104 over a communications link 106 to cause the electronic document to be printed at the printing device 104 at the date and time indicated by the schedule data 124.

14. The method as recited in Claim 13, further comprising transmitting to the printing device 104, print data 122 that reflects the electronic document, wherein the print data 122 is transmitted to the printing device 104 with the schedule data 124.

15. The method according to either Claim 13 or Claim 14, further comprising transmitting to the printing device 104, print data 122 that reflects the electronic document, wherein the print data 122 is transmitted to the printing device 104 separate from the schedule data 124.

16. A computer program comprising program code means that, when executed on a computer system instructs a system to carry out the steps according to any one of Claims 13 to 15.

17. A computer readable storage medium having recorded thereon program code means that, when executed on a computer system, instructs a system to carry out the steps according to any one of Claims 13 to 15.
